Europäisches Patentamt

European Patent Office

Office européen des brevets

(11) Publication number: **0 455 134 A1**

# EUROPEAN PATENT APPLICATION

(21) Application number: **91106669.4**

(22) Date of filing: **25.04.91**

(51) Int. Cl.⁵: **B27B 5/06, B23D 47/02, B26D 7/06**

(30) Priority: **03.05.90 IT 1245690**

(43) Date of publication of application:
**06.11.91 Bulletin 91/45**

(84) Designated Contracting States:
**AT BE CH DE DK ES FR GB GR LI NL SE**

(71) Applicant: **GIBEN IMPIANTI S.p.A.**
**24, Via Garganelli**
**I-40065 Pianoro (Bologna)(IT)**

(72) Inventor: **Benuzzi, Piergiorgio**
**Via Angelo Custode 7**
**I-40100 Bologna(IT)**

(74) Representative: **Porsia, Bruno et al**
**c/o Succ. Ing. Fischetti & Weber Via Caffaro 3/2**
**I-16124 Genova(IT)**

(54) **Apparatus for transferring stacks of panels in a cutting plant of the angular type.**

(57) In a cutting plant of the angular type, wherein the worktable (C) of the cutting machine for transverse cuts to be made in stacked panels, is located at a lower level than the worktable (A1, A2) of the first cutting machine (Z1), and wherein a comb member (3) is operated downstream of the first cutting machine, performing the functions of taking up a stack of cut panels, of transferring and properly depositing the same on the worktable of the last cutting machine, and of opening and closing a pit (K) located immediately downstream of the first cutting machine, into which any leading and trailing scraps of a panel stack will be discharged, the invention provides for the projecting ends (103) of the said comb member to be turned toward the first cutting machine (Z1), and to be caused to get into respective grooves (5) in the small worktable (A2) located downstream of the first cutting machine, so that the projecting ends will be disposed flush with the cutting line. At this stage, the comb member is coplanar to, or lies at a slightly lower level than the worktable (A1, A2) of the first cutting machine. When the last longitudinal cut has been made in a panel stack (X), and the pusher (S1) in the longitudinally cutting machine is being returned at the starting of a working cycle, the comb member (3, 103) is slightly lifted up, so that a panel stack will be surely set at a distance from the underlying worktable (A2), the said comb member being then horizontally translated to have the panel stack transferred on to the table (C) for transporting the stacked panels, on which the panel stack is deposited by the comb member being lowered down and withdrawn under this table.

EP 0 455 134 A1

Fig 2

The invention relates to the plants for cutting stacks of panels of wood and/or of any like material, and comprising at least two cutting machines arranged at right angles with each other, one of which being provided for longitudinally cutting the panels, and the other for transversely cutting the same panels.

In certain plants of this type, it is known to provide the stacked panels taking up table downstream of the first cutting machine, at a slightly lower level than the table supporting the panels upstream of the said first cutting machine. It is also known to provide a pit downstream of the first cutting machine, throughout the length thereof, into which any leading and trailing scraps from a longitudinal cutting of the stacked panels are discharged, and are then evacuated by suitable conveying means. This pit is normally set in closed condition by a horizontally extending comb member arranged coplanar to the worktable of the first cutting machine, which is horizontally shiftable by suitable means to close or open the said pit, and which can be lifted and lowered, at first for taking up the stacks of panels or strips delivered from the first cutting machine, and then for depositing the same on the worktable of the second cutting machine.

The pit is located at a distance from the cutting line of the longitudinally cutting machine, close to a small stationary worktable lying downstream of this cutting machine, and against which the said comb member is caused to coplanarly abut, so that this member will be also set at a distance from the cutting line of the first cutting machine. When the cutting of a panel stack has been completed, this panel stack must be pushed by the gripping means associated with the first cutting machine, from its rear end side on to the comb member. Such a requirement involves the following drawbacks:

- Idle times are introduced into the cutting cycle, owing to the forward and backward further stroke of the pusher which is needed for a panel stack to be fully transferred on to the comb member;
- A disarrangement of a stack of cut panels may be produced, any time the scraps left upstream of the stack of cut panels are of a small size. In this instance, the scraps have a poor consistency, and may be easily unsettled, even though the scraps are clamped between the gripping means of the pusher in the first cutting machine.

Owing to such serious inconveniences it is impossible to apply the aforementioned known techniques on an industrial scale, wherefore they remained up to now at the state of a mere and simple theoretical exercise.

The invention aims to obviate to these and other serious inconveniences by the following idea for solving the same. The comb member end turned toward the longitudinally cutting machine, is so provided as to be insertable into suitable grooves in the stationary small worktable located downstream of the said cutting machine, and as to be disposed substantially flush with the cutting line. The comb member is coplanar to the wortktable of the first cutting machine, or is arranged at a slightly lower level under the said worktable, so that it will not impede the sliding movement of the stacked panels.

When the cutting of a panel stack has been completed, the comb member is slightly lifted up, so that the panel stack end portion will be surely spaced from the underlying worktable of the first cutting machine, whereupon the comb member is translated and the panel stack is thus transferred on to the worktable of the second cutting machine. Any trailing panel stack scraps are left on the worktable of the first cutting machine by the gripping means being returned at the starting of a new panel stack-gripping cycle, and a sweeping off member is operated in timed relation, and is lowered down upstream of the cutting line and caused to sweep the worktables of the first cutting machine, whereby the scraps are pushed into the pit having been set in open condition by the said comb member.

By this embodiment, any idle times in the known embodiments are eliminated, and any disarrangement of a panel stack is avoided.

These and other features of the invention, and the advantages arising therefrom will clearly appear from the following specification of one preferred embodiment thereof, which is shown merely by way of a non-limiting example in the Figures of the annexed seven sheets of drawing, in which:

Figure 1 is a top plan view showing some components of the frame of the apparatus according to the invention, forming part of the cutting plant in which the said frame is operated.

Figures 2 and 3 are side elevational views with parts in section, showing the delivery apparatus in its two different operative positions.

Figure 4 is a side view showing one side of the apparatus transversely sectioned on line IV-IV in Figure 1.

Figure 5 is a side view like that in Figures 2 and 3, showing further constructional details of the apparatus.

Figures 6, 7, 8, 9, 10, and 11 are side views showing an operative sequence of the apparatus.

Figure 12 is a side view with parts in section showing the sweeping off member provided for discharging the trailing panel stack scraps.

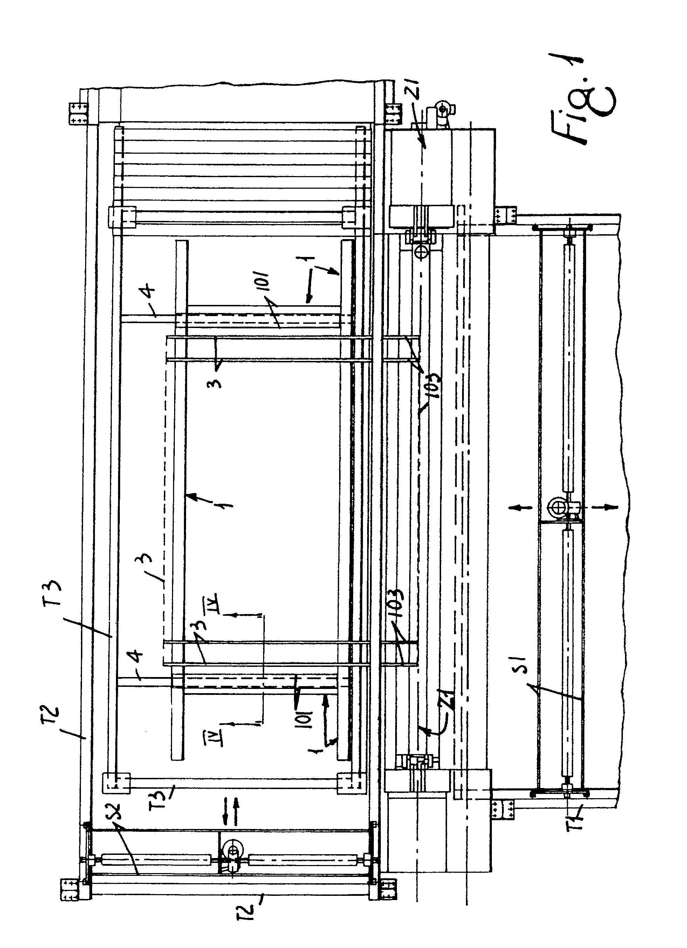

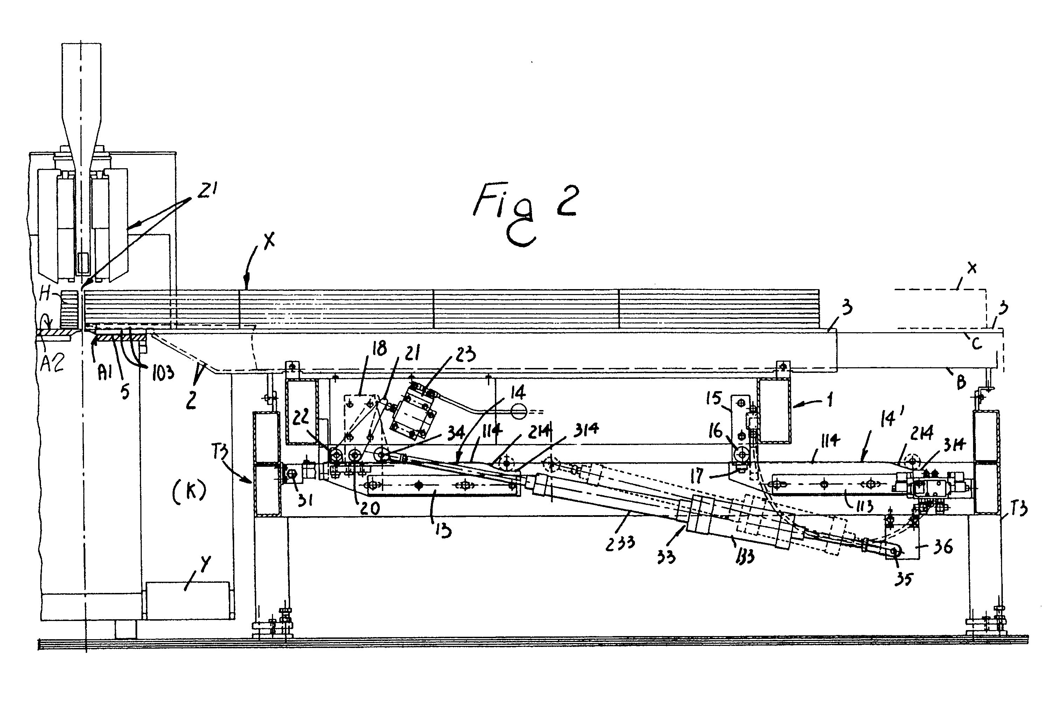

In Figures 1, 2, and 4, reference Z1 denotes the longitudinally cutting machine which is upstream and downstream provided with two horizontal small worktables A1 and A2 between which the panel-cutting disk saw is operated upon control. Reference S1 denotes the pusher which is interlocked with the cutting machine Z1, and reference S2 denotes the pusher which is interlocked with the cutting machine for transverse cuts to be made in stacked panels. Still in Figure 1, references T1 and T2 denote the frames on which the pushers S1 and S2 are caused to slide. Reference T3 denotes the frame carrying the horizontally arranged, coplanar guides forming the worktable for the second cutting machine, and numeral 1 denotes the movable horizontal frame carrying the comb member of the apparatus according to the invention. In the detailed view shown in Figure 4, there appears that the frame T3 supports the ends of coplanar crosspieces B arranged parallel to pusher S2, on which are mounted the coplanar guides C forming the worktable for the second cutting machine, the said worktable being provided in its section near the cutting machine Z1, with transversal apertures for allowing the comb member to be motivated in these apertures. The worktable formed by the guides C is located at a suitably lower level than the worktable of the cutting machine Z1.

Still in Figure 4, numeral 2 denotes the crosspieces fitted on frame 1, arranged in parallel relationship and interposed between the crosspieces C of the stationary frame T3, on which are mounted the horizontal coplanar guide rods 3 made of a suitable material and forming the comb member worktable, with their ends turned toward the cutting machine Z1 overhangingly projecting by a suitable length from the crosspieces 2, as shown in Figures 2 and 3 by numeral 103.

The comb member formed by the guide rods 3, is mounted on crosspieces 4 fixedly secured to the frame T3, with the interposition of means of any suitable type, which are apt to impart to the comb member the following motions:

- a motion of translation along the longitudinal axis, for causing the comb member to be drawn near to, and away from the cutting machine Z1,
- a motion for causing the comb member to be lifted and lowered always below the ideal plane which is coplanar to the worktable of the cutting machine Z1,
- a lifting and lowering motion for causing the comb member to be moved over, and then under the ideal plane which is coplanar to the worktable of the cutting machine Z1.

When the comb member formed by the guide rods 3, is set in the position in which it is drawn near to the cutting machine Z1, its projecting ends 103 are inserted into respective grooves 5 in the worktable A2 lying downstream of the cutting machine Z1 (see Figures 2 and 3), so that these ends come to be disposed substantially flush with the cutting line of the said cutting machine. In such a condition, the comb member 3-103 is horizontal and is coplanar to, or lies at a slightly lower level (few tenth of a millimeter) under the ideal plane containing the worktables A1, A2. Still in this condition, the comb member 3-103 closes the top of pit K arranged between the cutting machine Z1 and the frame T3, which is as long as the said cutting machine, and is provided at its bottom with conveying means Y for the scraps being periodically discharged into this pit, to be removed therefrom.

As shown in Figure 3, at the starting of every working cycle the comb member 3-103 is so positioned as to be drawn away from the cutting machine Z1, so that it leaves in open condition the pit K into which the leading panel stack scraps will be discharged, by being pushed thereinto by the very same panel stack during its travel to the position immediately succeeding the position in which its forward end side is trimmed. When the leading scraps have been discharged, the comb member 3-103 is automatically positioned as shown in Figure 2, so that it sets the pit K in closed condition, and comes to be flush with the cutting line of the cutting machine Z1.

The length of the comb member 3-103 is such that a panel stack X having been subjected to a cutting operation by the cutting machine Z1, can be entirely taken up by the comb member.

As shown in Figure 2, when the last cut has been made in a panel stack, the entire panel stack is already positioned on the comb member 3-103, so that the gripping means associated with the pusher S1 of the cutting machine Z1, are not required to perform any additional stroke, and can be then returned into their cycle-starting position, for a new operative sequence to be repeated. When the last cut has been made by the cutting machine Z1, the comb member 3-103 is lifted up by a small amount, so that the stacked panel strips lying on the worktable A2, will be lifted up therefrom. The comb member 3-103 is now horizontally translated, and the panel strip stack is thus moved into the proper position over the worktable for the second cutting machine, formed by the guides C, whereupon the comb member is lowered down to cause this panel strip stack to be deposited on the said guides. While this panel strip stack is being gripped by the gripping means associated with the pusher S2, and is being transferred to the cutting machine for transverse cuts to be made therein, the means shown in Figure 12 will discharge into the open pit K the trailing scraps H of the removed panel strip stack, left on the worktable A1 of the cutting machine Z1.

In Figure 12 there is shown that upstream of the cutting machine Z1, guides 6 are secured to the end sides of frame T1 on which the pusher S1 is caused to slide, and by means of rollers 106 the said guides slidably support respective inclined slides 7 which at their lower ends carry the bodies of a pair of double-acting, fluid pressure-operated horizontal jacks 8, with their stems supporting the edge portions of a sweeping off member 9 arranged parallel to the cutting line of the cutting machine Z1. Suitable means are provided for the slides 7 to be synchronously lifted and lowered, so that when these slides are lowered down, the sweeping off member 9 comes to be positioned at the back of the scraps H to be discharged. By the jacks 8 being actuated, the sweeping off member 9 is translated as shown in Figure 3, so that the scraps H are pushed by this member into the pit K. In phase succession, the sweeping off member 9 is returned by the jacks 8 in rest position, whereafter the slides 7 are lifted up, and the sweeping off member is thus moved again into its upper position in which it does not interfere with the pusher S1. To be lifted and lowered, the slides 7 are connected by their lower ends to the one end of respective steel wire ropes or steel ribbons 10, which by their other end are wound about the ends of a shaft 11 arranged parallel to the sweeping off member 9, and rotatably supported by the supporting guides 6. This shaft is rotated in both directions by a small geared motor 12 or by any other suitable means acting on only one end of said shaft.

The comb member 3-103 can be motivated by any suitable known means. One preferred embodiment of these means will be now described by referring to Figures 2 and 4. A pair of equal cams 14, 14' substantially in form of flat bars, are fixedly connected with the interposition of adjustable supports 13, 113 to each crosspiece 4 of the stationary frame T3, and the upward profile of these cams consists of a horizontally extending straight long section 114, of an inclined section 214, and a short section 314 extending horizontally at a lower level than the section 114. The sections 114 of these cams lie in a same horizontal ideal plane which is at a suitably higher level than the ideal plane containing the sections 314 of these cams. The frame 1 of the comb member 3-103 has downwardly directed brackets fixedly connected to the end sides 101 thereof, which at their lower ends are fitted with horizontal axis rollers and vertical axis rollers for cooperation with the upward profile and the inward side of the said flat bar cams 14, 14', respectively. More particularly, the frame 1 has fixed brackets 15 fitted on its sides, near the rear end thereof, and carrying a horizontal axis roller 16 and a vertical axis roller 17 (Figure 2), respectively acting on the upward profile and on the inward side of the rear cams 14'.

At the front end of frame 1, the sides of this frame are provided with brackets 18 which at their lower end carry respective vertical axis rollers 19 (Figure 4) for cooperation with the inward sides of cams 14. Levers 21 are pivotally connected at an intermediate location 20 to the outward side of these brackets 18, and a horizontal axis roller 22 for cooperation with the upward profile of the fore cams 14, is carried at the lower end of said levers, which by their upper end are caused to cooperate by gravity with the stem of a small jack 23 even of the single-acting type, whose body is fastened to the end side 101 of frame 1.

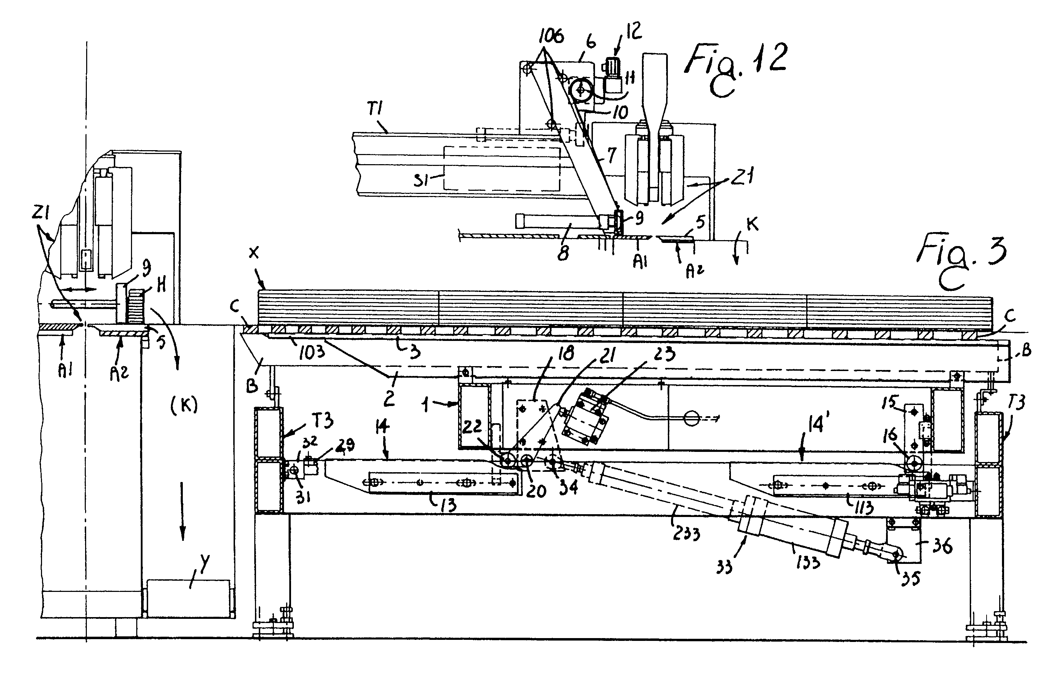

Near the brackets 18, the end sides 101 are also provided with downwardly directed parallel brackets 24 (see Figures 4 and 5) rotatably supporting a shaft 25 arranged parallel to the cutting machine Z1, and having pinions 26 of a same diameter keyed to the one end thereof. Over these pinions, each bracket 24 carries a small, upturned U-shaped guide 28 swingably mounted on the fastening bolt 27, which is for the said pinions 26 and the relative racks 29 to be kept in mutual cooperation, the said racks being orthogonal to the shaft 25 and being secured by one end to a support 30 which is pivotally connected at 31 to a support 32 which in turn is fixedly connected to the frame T3 longitudinal member lying near to the aforementioned pit K (see also Figure 2). Thanks to the provision of these latter means, it is possible to synchronize the motion of translation as imparted to the comb member by a system of fluid pressure-operated, double-acting jacks 33, which by one end are anchored at 34 to each bracket 18 and by the opposite end are anchored at 35 to a bracket 36 secured to the frame T3. By these actuating systems 33 (see hereinafter) the comb member is longitudinally shifted on cams 14, 14', whereby the comb member is moved to its different operative levels, as required for being at first caused to cooperate with the worktable A2 of the cutting machine Z1, to take up a panel stack being delivered therefrom, and then to deposit this panel stack delicately on the guides C forming the worktable for the cutting machine for transverse cuts to be made in stacked panels.

When the stems of jacks 33 are extended upon control by a predetermined stroke, as shown by dash lines in Figure 2, the comb member is pivoted about the rear rollers 16 so that its forepart 103 will be lifted up as required for a stack of panels to be spaced from the worktable A2 of the cutting machine Z1. Thanks to such a simple pitching movement, it is avoided that the whole comb member should be lifted up, as in the previously considered example, which affords the conceivable advantages arising from such a condition.

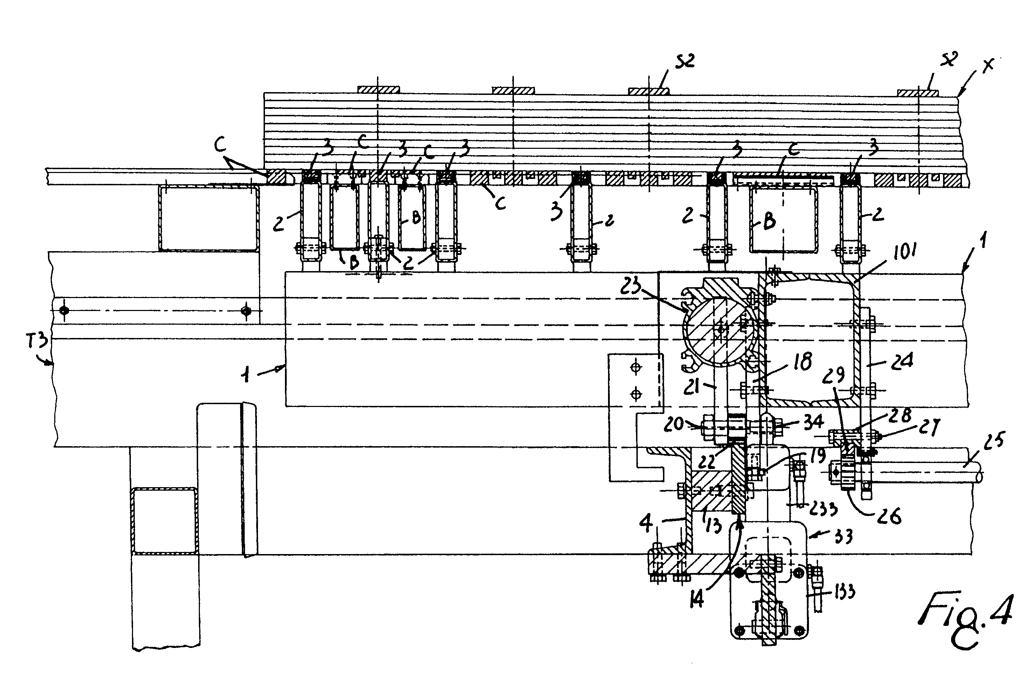

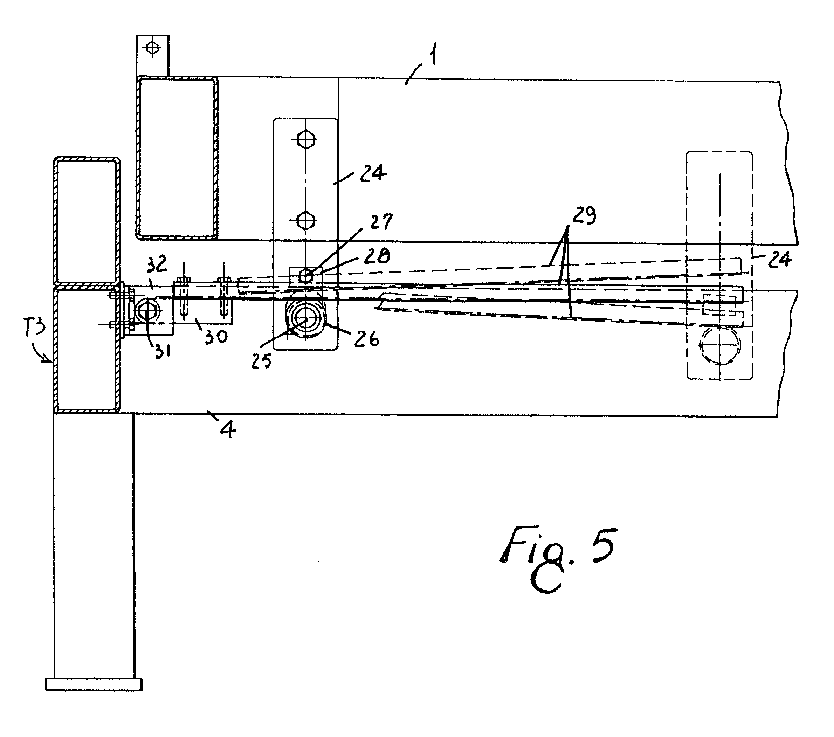

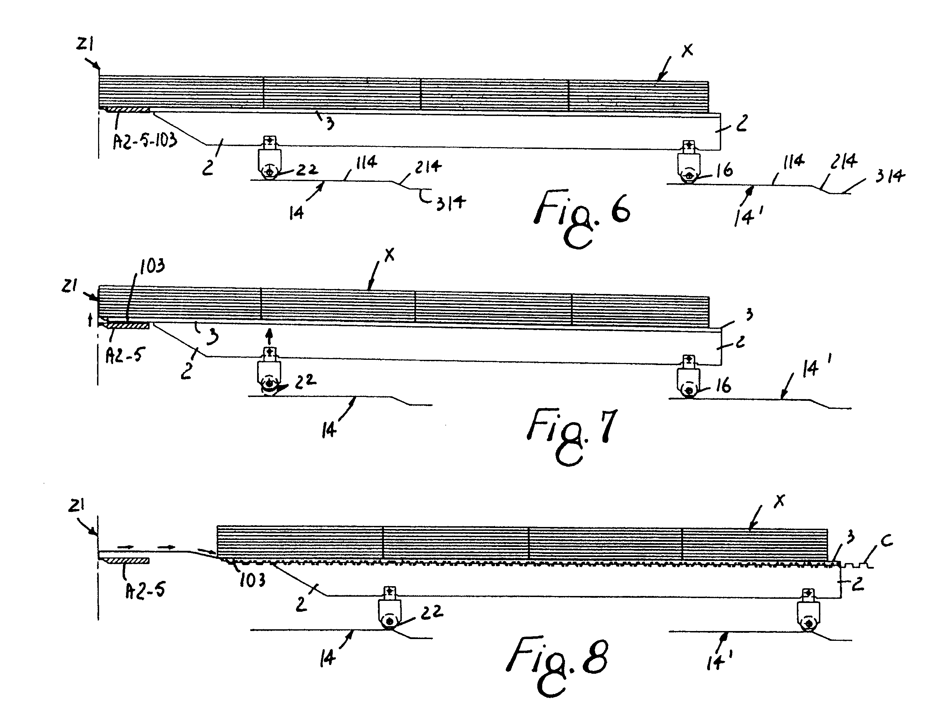

Figure 6 shows the comb member set in cooperation with the worktable A2 of the cutting machine Z1. At this stage, the comb member is caused to cooperate with the straight section 114, 114' of the upward profile of cams 14, 14', and the jacks 23 are at rest. Figure 7 shows the comb member in the position in which the transfer of a panel stack is being started, and the jacks 23 are actuated, whereby the forepart of the comb member is lifted up, and a panel stack X will be thus lifted from the worktable A2 of the cutting machine Z1.

Figure 8 shows that the comb member is being kept in the condition shown in Figure 7, until its projecting ends 103 are caused to come out of the worktable A2, whereupon the jacks 23 are de-actuated, and the comb member comes to be disposed horizontally before being lowered.

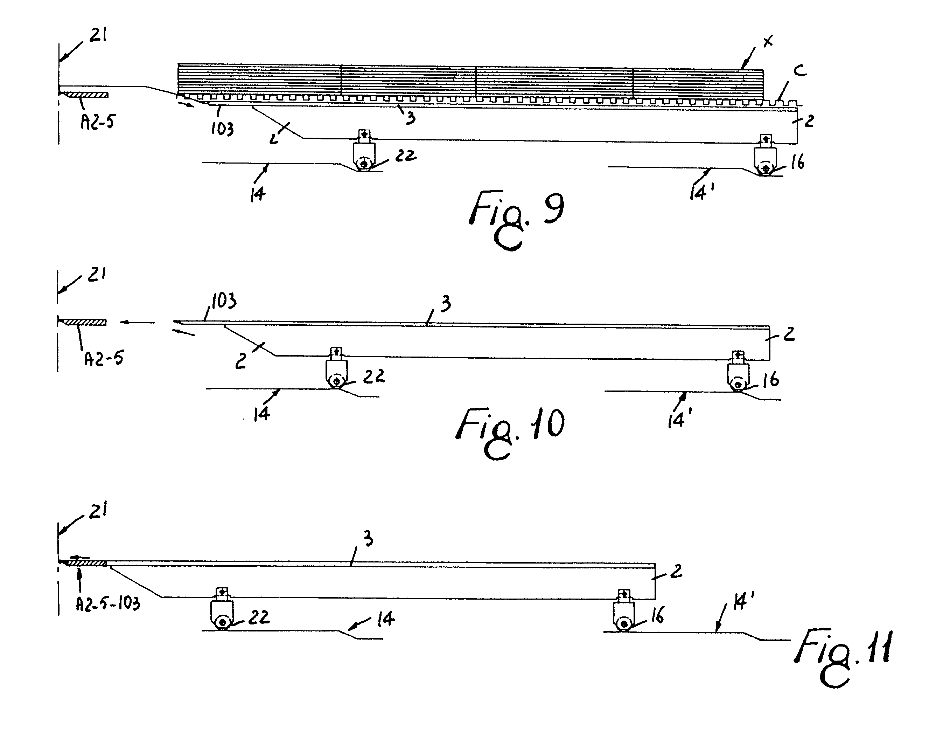

Figure 9 shows the comb member lowering step, with the rollers having been caused to run through the inclined section 214, 214' and to come on the lower section 314, 314' of cams 14, 14'. The comb member is lowered down under the guides C on frame T3, and a panel stack X is thus delicately deposited on the said guides.

As shown in Figures 10 and 11, the comb member is caused to travel back into cooperation with the worktable A2 of the cutting machine Z1 without the jacks 23 being actuated, and with the comb member being always arranged horizontally.

In Figures 2, 3, and 4, there is seen that each system of jacks 33 consists of a pair of jacks which are fixedly connected to each other by their bodies, and are mutually connected in sequence; of these jacks, the one jack designated by numeral 133, is shorter than the other jack 233 and has a greater cross-section so that with the feeding pressure being equal, the jack 133 will develop a stronger thrust and will move more slowly the comb member.

The jack 133 will drive the comb member with the highest power when the comb member shall be caused to get over the inclined sections of cams 14, 14'.

As disclosed above, the two jacks are mutually connected in sequence, so that when the one jack is stopped, the other jack will be automatically set in operation, and these jacks are provided with end-of-stroke shock absorbers, the whole arrangement being such as to be conceivable and practicable by those skilled in the art.

At least one of the two jacks is of the non-rotary type, whereby the bodies of these jacks are prevented from turning about their stems, and from subjecting the feeding ducts to any undesired tensive stress.

## Claims

1. An apparatus for taking up stacks of panels delivered from a cutting machine and for transferring them in order on to the worktable of a successive cutting machine, which is particularly suitable for plants having a longitudinally cutting line and a transversally cutting line, wherein the worktable (C) for the cutting machine for transverse cuts to be made in stacked panels, is located at a lower level than the worktable (A1, A2) of the first cutting machine (Z1), and wherein a horizontal comb member (3) is operated downstream of the said first cutting machine, the said comb member performing the function of taking up a stack of cut panels, of transferring and properly depositing the same on the worktable for the second cutting machine, and performing also the function of opening and closing a pit (K) located immediately downstream of the first cutting machine, into which any leading and trailing scraps of a stack of longitudinally cut panels will be discharged, the said apparatus being characterized in that the projecting ends (103) of the said comb member (3) are turned toward the first cutting machine (Z1), and are caused to get into respective grooves (5) in the worktable (A2) located downstream of the said first cutting machine, so that these projecting ends will be disposed substantially flush with the cutting line, the comb member being at this stage coplanar to, or lying at a slightly lower level than the worktable (A1, A2) of the first cutting machine, suitable means being provided for the comb member (3-103) to be slightly lifted up when the last longitudinal cut has been made in a panel stack and the pusher in the longitudinally cutting machine is being returned to the position for a working cycle to be repeated, whereby a panel stack (X) will be surely set at a distance from the underlying worktable (A2) of the cutting machine, the said comb member being then horizontally translated to have the panel stack transferred on to the table (C) for transporting the stacked panels, on which this panel stack is delicately deposited by the comb member being lowered down and withdrawn under the said table, a sweeping off member (9) being provided, which when the comb member has been driven away from the first cutting machine and the pit (K) arranged downstream of this cutting machine has been set in open condition, is lowered down upstream of the trailing scraps (H) left on the worktable of the said first cutting machine, and is operated and caused to push these trailing scraps into the said pit, the sweeping off member being then returned into its upper position, in which it does not interfere with the pusher in the longitudinally cutting machine.

2. The apparatus according to Claim 1, characterized in that the frame (1) of the comb member (3-103) has horizontal axis rollers (16, 22) and vertical axis rollers (17, 19) fitted on its sides, which are caused to cooperate respectively with the upward profile and the inward side of stationary cams (14, 14') substantially in form of flat bars, the said upward profile having two straight sections (114, 114'; 314, 314') of a different length and extending horizontally at different levels, which are interconnected by an inclined section (214, 214'), the whole arrangement being such that the comb member being shifted on the said cams, will be horizontally translated, and will be lowered and lifted as required for being moved at first into cooperation with the worktable (A2) of the first cutting machine, and then for being withdrawn under the worktable (C) for the last cutting machine, and vice-versa.

3. The apparatus according to Claim 2, wherein the horizontal axis rollers (22) on the comb member frame, which are near to the comb member end side turned toward the first cutting machine, are mounted on lifting and lowering means, such as on the ends of levers (21) which at an intermediate location are pivotally connected to the said frame (101) and are connected to a driving jack (23), the whole arrangement being such that when these means are actuated, the comb member forepart supporting the end portion of a stack of panels, will be lifted up by a pitching movement, so that the panel stack will be set at a distance from the underlying worktable (A2), before the comb member having been translated and caused to transfer this panel stack, means being provided for the comb member to be automatically re-arranged into its horizontal position before the rollers having been caused to run over the inclined section (214, 214') of the respective, comb member-guiding flat bar cam.

4. The apparatus according to Claim 2, characterized in that means are provided for the linear movements of the comb member frame to be synchronized, the said means comprising a horizontal shaft (25) which is rotatably supported by, and is arranged transversely under the said frame, and is fitted with equal pinions (26) keyed onto the ends thereof, which are caused to cooperate with respective racks (29) arranged parallel to the comb member-guiding flat bar cams (14, 14'), and having one end articulatingly connected at fixed locations (31) mutually aligned along an axis being parallel to the said pinion-carrying shaft, swingable small guides (28) being provided for the required cooperation between the racks and the relative pinions to be maintained.

5. The apparatus according to Claim 2, wherein the comb member is imparted its horizontal motion of translation by pairs of fluid pressure-operated, double-acting jacks (33) being caused to act on either side of the comb member frame, which are fixedly connected to each other by their bodies, are mutually aligned in the longitudinal direction, and are connected in sequence, the one jack (133) being provided with a greater cross-section and a shorter length than the other jack (233), and the said one jack being first operated while the said frame is being motivated, whereby the highest force will be applied as required at the starting of the frame motivation, at least one of the said jacks being of the non-rotary type.

6. The apparatus according to Claim 1, wherein the sweeping off member (9) for discharging the trailing scraps (H) is carried at its edge portions by the stems of a pair of fluid-pressure operated, double-acting jacks (8) having their bodies fixedly connected to the lower ends of a pair of inclined slides (7) carried by guides (6, 106) secured upstream of the longitudinally cutting machine, such as by the guides for the pusher of the said cutting machine, provisions being made for the slides to be synchronously lifted and lowered by a shaft (11) rotatably carried by the said guides, the said slides being connected to this shaft through any suitable means, such as ropes or ribbons, and the said shaft being rotated in both directions by further suitable means (12).

EP 0 455 134 A1

T2  T3

S2

T3

T2

4

3

3

IV   IV

101

1

101

1

1

103

103

Z1

Z1

S1

T1

Fig. 1

Fig 2

Fig. 12

Fig. 3

EP 0 455 134 A1

Fig.4

EP 0 455 134 A1

Fig. 5

Fig. 6

Fig. 7

Fig. 8

EP 0 455 134 A1

Fig. 9

Fig. 10

Fig. 11

EP 0 455 134 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE-A-3 110 860 (ESS) <br> * page 6, line 1 - page 14, line 6; figures 1-4,6 * <br> — — — | 1 | B 27 B 5/06 <br> B 23 D 47/02 <br> B 26 D 7/06 |
| Y | DE-A-3 034 205 (JENKER) <br> * page 6, line 26 - page 8, line 13; figures * <br> — — — | 1 | |
| A | EP-A-0 242 762 (MOHR) <br> * page 12, line 11 - line 25; figures 2,10 * <br> — — — — — | 1 | |

|  |
|---|
| TECHNICAL FIELDS SEARCHED (Int. Cl.5) |
| B 27 B <br> B 23 D <br> B 26 D <br> B 21 D <br> B 23 Q |

The present search report has been drawn up for all claims

| Place of search | Date of completion of search | Examiner |
|---|---|---|
| The Hague | 09 August 91 | GARELLA M.G.C.D. |